# EUROPÄISCHE PATENTSCHRIFT

(11) **EP 3 251 554 B1**
(45) Veröffentlichungstag und Bekanntmachung des Hinweises auf die Patenterteilung: **14.11.2018**
(21) Anmeldenummer: 17168539.9
(22) Anmeldetag: 27.04.2017
(51) Int. Cl.: A47B 13/02, F16B 12/20, F16B 12/32, F16B 12/42

(54) **VERBINDUNGSEINRICHTUNG ZUM VERBINDEN EINES TISCHBEINS MIT EINER TISCHPLATTE**
JOINING DEVICE FOR JOINING A TABLE LEG TO A TABLETOP
DISPOSITIF DE LIAISON DESTINÉ À RELIER UN PIED DE TABLE À UNE PLATEAU DE TABLE

(30) Priorität: 02.06.2016 DE 102016110254
(43) Veröffentlichungstag der Anmeldung: 06.12.2017
(73) Patentinhaber: Walter Knoll AG & Co. KG, 71083 Herrenberg (DE)
(72) Erfinder: Bergmann, Martin, 1180 Wien (AT); Bohmann, Gernot, 1010 Wien (AT); Gründl, Harald, 1030 Wien (AT); Röhm, Jürgen, 70771 Leinfelden-Echterdingen (DE); Brinkmann, Rainer, 70839 Gerlingen (DE)
(74) Vertreter: Ostertag & Partner Patentanwälte mbB

(56) Entgegenhaltungen:
- EP-A1- 0 753 672
- EP-B1- 1 915 923
- DE-U1- 29 914 651
- DE-U1-202008 006 009
- FR-A1- 2 805 866
- JP-A- 2009 014 007

## Beschreibung

### HINTERGRUND DER ERFINDUNG

### 1. Gebiet der Erfindung

Die Erfindung betrifft eine Verbindungseinrichtung zum Verbinden eines Tischbeins mit einer Tischplatte, die aufweist:
a) ein Hintergreifungselement, welches in oder an der Tischplatte ausgebildet bzw. anordenbar ist und ein Eingriffsloch aufweist,
b) eine Verriegelungseinrichtung, die in oder an dem Tischbein ausgebildet bzw. anordenbar ist, mit
   - einem Klemmelement mit einem Eingriffshaken, der dazu eingerichtet ist, in das Eingriffsloch des Hintergreifungselements einzugreifen,
   - einem Federelement, das sich einerseits zumindest indirekt an dem Klemmelement und andererseits zumindest indirekt an einem Federwiderlager abstützt, und mit
   - einem Betätigungselement.

### 2. Beschreibung des Standes der Technik

Derartige Verbindungseinrichtungen sind bekannt, um beispielsweise eine große Anzahl von Tischplatten zusammen mit den zugehörigen Tischbeinen platzeffizient zu lagern. Ferner sind derartige Verbindungseinrichtungen auch für sogenannte Konferenztischsysteme bekannt, bei welchen jeweils zwei Tischplatten über ein Tischbein miteinander verbunden werden. So ist beispielsweise aus der EP 1 915 923 B1 ein Tischbein bekannt, bei welchem das Klemmelement zur Entriegelung von einem Betätigungselement gegen die Wirkung des Federelements - die Klemmung lösend - zurückbewegt wird.

Ferner ist aus der EP 0 753 672 A1 eine Verbindungseinrichtung für Konferenztischsysteme bekannt, bei der durch eine Zugfeder zwei Eingreifhaken zusammen gezogen und so in Tischplatten-Hintergreifungen gesichert werden. Um in eine Freigabeposition zu gelangen, müssen Kipphebel betätigt werden, die ein Auseinanderstreben der Eingreifhaken bewirken, wodurch die Zugfeder zusätzlich belastet wird.

Eine Vorrichtung zum Verbinden einer Tischplatte mit einer Positionierschiene ist außerdem bereits aus der JP 2009 014007 A bekannt. Bei dieser Verbindungsvorrichtung schnappen bei Betätigung eines Betätigungshebels Widerhaken heraus, die den Tisch ortsfest in der Positionierschiene befestigen. Zum Öffnen der Verbindung muss der Betätigungshebel gegen die Kraft zweier Druckfedern betätigt werden, um Schieber, die zwischen den Widerhaken angeordnet sind, herauszuziehen. Dadurch bewegen sich die Widerhaken von Drehfedern getrieben in die Gehäusekontur zurück, wodurch die ortsfeste Verbindung gelöst wird.

Es hat sich jedoch gezeigt, dass aus Bedienbarkeitsgründen eine andere mechanische Lösung für die Ver- und Entriegelung wünschenswert wäre.

### ZUSAMMENFASSUNG DER ERFINDUNG

Es ist daher Aufgabe der vorliegenden Erfindung, eine eingangs genannte Verbindungseinrichtung anzugeben, die hinsichtlich ihres Ver- und Entriegelungsmechanismus verbessert ist. Erfindungsgemäß wird dies durch eine Verbindungseinrichtung eingangs genannter Art erreicht, bei welcher
c) das Betätigungselement zumindest indirekt derart auf das Federwiderlager wirkt, dass
   - in einer Verriegelungsstellung das Federwiderlager sich in einer Position befindet, in welcher das Federelement ausreichend Kraft aufbringt, um den Eingreifhaken des Klemmelements in dem Eingriffsloch des Hintergreifungselements zu sichern, und dass
   - in einer Entriegelungsstellung das Federwiderlager sich in einer Position befindet, in welcher das Federelement gegenüber der Verriegelungsstellung zumindest teilweise entlastet ist.

Die Erfinder haben erkannt, dass anstatt das Klemmelement über das Betätigungselement entgegen der Federwirkung des Federelement zu bewegen es auch möglich ist, das Federwiderlager, an welchem sich die vom Klemmelement abgewandte Seite des Federelements abstützt, zu bewegen. Dadurch wird für die Entriegelung das Federelement entlasten anstatt wie bisher gespannt. Die Verriegelungseinrichtung ist somit in Hinblick auf die potentielle Federenergie in der Entriegelungsstellung in einem niedrigeren Energiezustand als in der Verriegelungsstellung. Die Verriegelungsstellung ist folglich nicht auf einem Energiemaximum, wodurch gewährleistet wird, dass die Entriegelungsstellung auch gehalten wird. Dennoch kann durch die Federwirkung das Klemmelement bezüglich des Eingriffslochs "arbeiten", um beispielsweise leichte Passungsschwierigkeiten auszugleichen oder auf Vibrationen der Tischplatte zu reagieren. Die Federkraft muss dabei ausreichend sein, um die typischerweise bei der Beanspruchung der Tischplatte auftretenden Kräfte aufzunehmen, ohne dass der Eingriffshaken aus dem Eingriffsloch heraustreten kann.

Obwohl das Ausführungsbeispiel nur anhand einer Druckfeder gezeigt ist, ist erfindungsgemäß auch eine Verriegelungseinrichtung mit einer Zugfeder oder andersartigen Federelementen denkbar. Das Federwiderlager ist somit auch bezüglich einer Zugfeder als entsprechende Stütze aufzufassen. Darüber hinaus kann das Federwiderlager auch einstückig mit dem Federelement verbunden sein, beispielsweise als dicker ausgeführte letzte Windung einer Feder. Ferner sind erfindungsgemäß auch Verriegelungseinrichtungen umfasst, die innerhalb der mechanischen Wirkkette gegenüber denen in den Ansprüchen aufgeführten Elementen zusätzliche Bauteile als Zwischenbauteile aufweisen.

Der Erfindungsgedanke ist, auch wenn die Verbindungseinrichtung hier nur in einer linearen Form gezeigt ist, auch auf eine mechanische Wirkkette übertragbar, die beispielsweise mit einem drehenden Klemmelement arbeitet. Dies kann sich auch nur auf Teile der mechanischen Wirkkette beziehen, so dass beispielsweise das Betätigungselement als Kipphebel oder aber auch als Drehhebel ausgeführt sein kann.

Das Hintergreifungselement wird typischerweise als metallische Platte ausgebildet sein, welche über eine entsprechende Ausnehmung an der Tischplatte angeordnet wird. Es ist jedoch auch denkbar, dass das Eingriffsloch über eine Hinterfräsung direkt an der Tischplatte vorgesehen ist.

Vorzugsweise wirkt das Betätigungselement beim Übergang in die Entriegelungsstellung zumindest indirekt derart auf das Klemmelement, dass das Klemmelement nach dem Entlasten des Federelements entgegen der Klemmrichtung bewegt, insbesondere verschoben, wird. Dadurch wird der Eingriffshaken zuverlässig aus seiner Hintergreifung im Eingriffsloch gelöst. Dies kann beispielsweise dadurch geschehen, dass das Federwiderlager am Ende seiner Bewegung in Federwirkrichtung an einem Mitnehmer angreift, der entweder am Klemmelement direkt vorgesehen ist, oder zumindest indirekt auf dieses wirkt, so dass das Klemmelement entgegen der Klemmrichtung verschoben wird.

Vorteilhaft ist das Betätigungselement über einen Knickhebel-Getriebe mit dem Federwiderlager verbunden. Ein Knickhebel-Getriebe erlaubt auf einfache Weise eine Umlenkung der Bewegung des Betätigungselements in eine Bewegung des Federwiderlagers und/oder des Klemmelements entlang und entgegen der Klemmrichtung des Klemmelements.

Vorteilhaft ist das Betätigungselement um eine Betätigungsachse drehbar gelagert und das Knickhebel-Getriebe umfasst ein Zwischenglied, das mit dem Betätigungselement und der Federanlage schwenkbar verbunden ist, wodurch zwischen dem Betätigungselement und dem Zwischenglied eine erste Knickachse und zwischen dem Zwischenglied und dem Federwiderlager eine zweite Knickachse definiert wird. Auf diese Weise lässt sich beispielsweise bei einem als Kipphebel ausgebildeten Betätigungselement eine Schwenkbewegung eines über die Betätigungsachse auskragenden Teils des Betätigungselements in eine Hubbewegung des Federwiderlagers umlenken.

Vorzugsweise verlaufen dabei die Betätigungsachse, die erste Knickachse und die zweite Knickachse parallel zueinander. Dabei kann die erste Knickachse in der Verriegelungsstellung auf einer Seite einer gedachten Verbindungsachse von der Betätigungsachse zur zweiten Knickachse zu liegen kommen. In der Entriegelungsstellung kann dann die erste Knickachse auf der anderen Seite der gedachten Verbindungsachse zu liegen kommen. Dadurch kann ein selbsthemmender Mechanismus ausgebildet werden, welcher dafür sorgt, dass die Verriegelungseinrichtung beim Übergang von der Verriegelungsstellung in die Entriegelungsstellung über einen Totpunkt, d.h. über ein energetisches Zwischenmaximum, hinweg bewegt werden muss. Auf diese Weise ist die Verriegelungsstellung sicher, da das Knickhebel-Getriebe nicht von sich aus, das heißt aufgrund einer Kraftwirkung seitens des Klemmelements her, in die Entriegelungsstellung gelangen kann. Insoweit erfüllt das Federelement eine Doppelfunktion: Einerseits gleicht es in der Verriegelungsstellung Toleranzen bezüglich der Klemmung des Eingreifhakens aus; andererseits stellt das Federelement einen Federweg für die Überwindung des Totpunkts des Knickhebel-Getriebes zur Verfügung. Selbstverständlich ist der letzte Gedanke auch auf andersartige, nicht als Knickhebel-Getriebe ausgeführte Verriegelungsmechanismen anwendbar, bei welchen ebenfalls ein Totpunkt zu überwinden ist.

Vorzugsweise weist die Verriegelungseinrichtung ein Rastelement auf, das in der Entriegelungsstellung mit dem Klemmelement derart zusammenarbeitet, dass das Betätigungselement nur unter einem definierten Kraftaufwand seitens eines Bedieners aus der Entriegelungsstellung bewegt werden kann. Auf diese Weise wird sichergestellt, dass der Eingreifhaken in einer Position verbleibt, in welcher er sich problemlos in das entsprechende Eingriffsloch des Hintergreifungselements einsetzen lässt. Dadurch kann das Tischbein ohne die Gefahr eines Verkantens an der Tischplatte befestigt werden. Vorteilhaft kommt als Rastelement dabei ein Bauteil zum Einsatz, das einen Anschlag für das Klemmelement sowie eine Symmetrieachse derart aufweist, dass hinsichtlich der Symmetrieachse zwei Rastzonen vorgesehen sind. Dadurch lassen sich identisch geformte Rastelement, wie weiter unten noch deutlich werden wird, sowohl für eine linkshändige als auch für eine rechtshändige Verriegelungseinrichtung verwenden.

Vorzugsweise weist die Verbindungseinrichtung zwei Verriegelungseinrichtungen mit separaten Betätigungselementen auf. Auf diese Weise kann eine Verbindungseinrichtung sich über die Ränder zweier Tischplatten erstrecken, sodass ein Konferenztischsystem aufgebaut werden kann. Für Einzelheiten zu dem Konzept eines Konferenztischsystems sei auf die eingangs genannte EP 1 915 923 B1 verwiesen.

Vorzugsweise weist das Hintergreifungselement zwei Eingriffslöcher auf, wobei ein Eingriffsloch senkrecht zur Klemmrichtung des Klemmelements eine größere, insbesondere etwa doppelt so große Abmessung hat, wie der Eingreifhaken des Klemmelements. Insbesondere kann das größere Eingriffsloch im an der Tischplatte angebrachten Zustand des Hintergreifungslements näher bei der Tischkante liegen. Auf diese Weise lässt sich ein Tischbein mit zwei Verriegelungseinrichtungen bei einem Konferenztischsystem am Übergang von zwei Tischplatten anbringen. Dabei werden an beiden Tischplatten die näher an der Tischkante liegenden länglichen Eingriffslöcher zum Einhaken verwendet. Soll das Tischbein jedoch bei einer Alleinstellung eines Tisches oder am Ende eines Konferenztisches an einer einzelnen Tischplatte befestigt werden, so lässt sich unter Verwendung des Einzellochs und des Langlochs das Tischbein weiter nach innen versetzt montieren, was aus optischen Gründen wünschenswert ist, ohne dass hierfür ein weiterer Satz an Eingriffslöchern vorgesehen werden müsste.

Unter Verwendung entsprechender Hintergreifungselemente lassen sich auf diese Weise selbstverständlich auch Über-Eck-Stellungen des Konferenztischsystems realisieren.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine perspektivische Explosionsdarstellung einer erfindungsgemäßen Verbindungseinrichtung zum Verbinden eines Tischbeins mit einer Tischplatte, die eine betätigbare Verriegelungseinrichtung aufweist;
- Figur 2: eine Schnittansicht durch die Verbindungseinrichtung mit der Verriegelungseinrichtung in einer Verriegelungsstellung;
- Figur 3: eine Schnittansicht durch die Verbindungseinrichtung mit der Verriegelungseinrichtung in einer halb geöffneten Stellung;
- Figur 4: eine Schnittansicht durch die Verbindungseinrichtung mit der Verriegelungseinrichtung in einer Entriegelungsstellung;
- Figur 5: eine Querschnittansicht durch ein Tischbein mit der erfindungsgemäßen Verbindungseinrichtung, wobei das Tischbein an einer einzelnen Tischplatte befestigt ist;
- Figur 6: eine Querschnittansicht durch ein Tischbein mit der erfindungsgemäßen Verbindungseinrichtung, wobei das Tischbein an zwei Tischplatten befestigt ist.

### BESCHREIBUNG EINES BEVORZUGTEN AUSFÜHRUNGSBEISPIELS

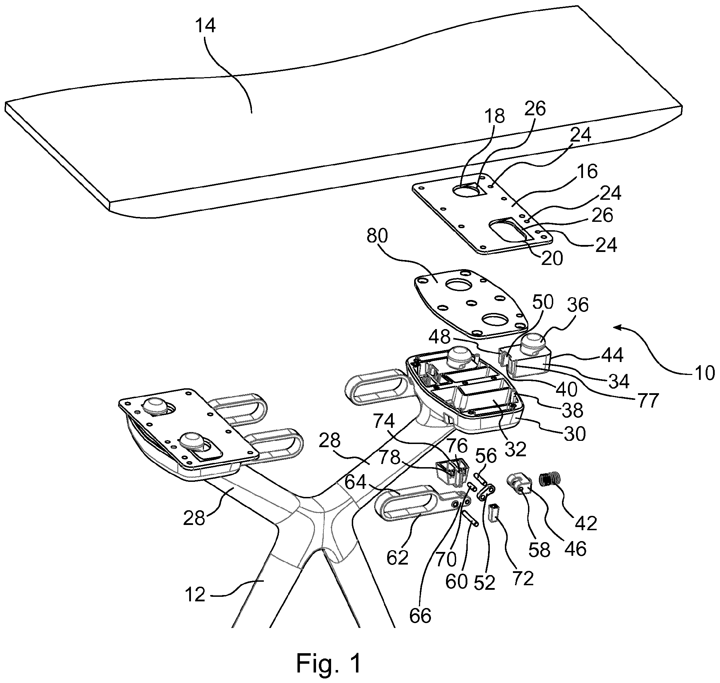

Figur 1 zeigt eine insgesamt mit dem Bezugszeichen 10 versehene Verbindungseinrichtung zum Verbinden eines hier im Wesentlichen kreuzförmig ausgebildeten Tischbeins 12 mit einer Tischplatte 14.

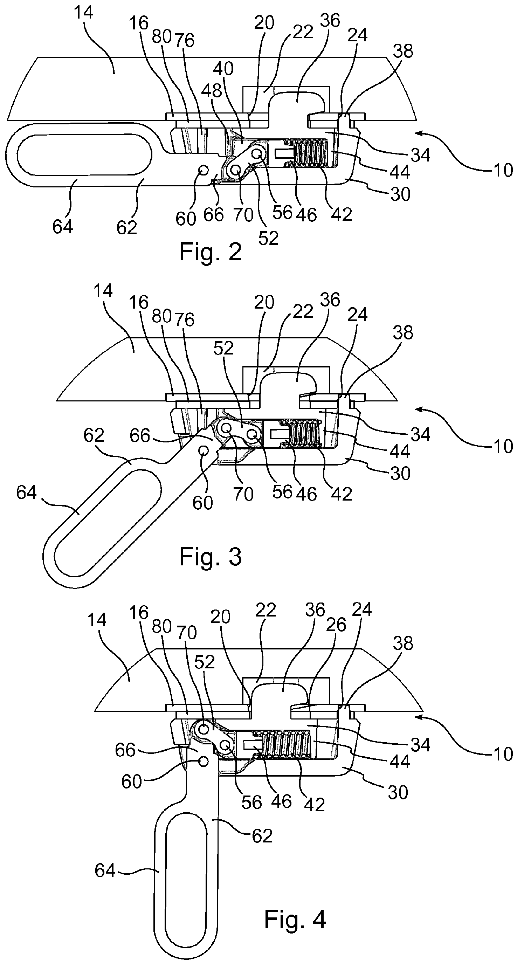

Die Verbindungseinrichtung 10 umfasst eine etwa rechteckige Metallplatte 16 als Hintergreifungselement, die ein Eingriffsloch 18 sowie ein in Längsrichtung der Tischplatte 14 längliches Eingriffsloch 20 aufweist. Die Metallplatte 16 ist von unten an der Tischplatte 14 angeschraubt und überdeckt eine Ausnehmung 22 (vgl. Figuren 2 bis 4) in der Tischplatte 14, wobei die Metallplatte 16 selbst so in die Tischplatte 14 eingelassen ist, dass die Unterseite der Metallplatte 16 mit der Unterseite der Tischplatte 14 fluchtet.

Die Metallplatte 16 weist ferner drei Stiftlöcher 24 auf, deren Bedeutung später deutlich wird.

Die Eingriffslöcher 18 und 20 weisen ferner zur Tischplatte 14 hin orientiert Einlaufschrägen 26 auf.

Das x-förmige Tischbein 12 weist an seinen oberen Tragarmen 28 jeweils eine Aufnahmeschale 30 auf, welche die wesentlichen Elemente der Verbindungseinrichtung 10 aufnimmt, die am Tischbein 12 angeordnet sind.

In der Aufnahmeschale 30 sind zwei Laufspalten 32 vorgesehen, in welchen jeweils ein als Schieber ausgebildetes Klemmelement 34 verschiebbar gelagert ist. Das Klemmelement 34 weist an seiner Oberseite einen Eingreifhaken 36 auf. Wie aus den Schnittansichten der Figuren 2 bis 4 ersichtlich ist, ist der Einrasthaken 36 der jeweiligen Klemmelemente 34 derart eingerichtet, dass er in die Eingriffslöcher 18 und 20 eingreifen kann und bei einer in den Schnittzeichnungen rechts gezeigten Stellung die Metallplatte 16 hintergreift, so dass das entsprechende Tischbein 12 an der Tischplatte 14 festgelegt ist. Dazu weist der Eingriffshaken 36 einen schlankeren Abschnitt auf, der einen hier zur Außenseite der Tischplatte 14 hin, auskragenden Abschnitt trägt, welcher auf den Einlaufschrägen 26 der Eingriffslöcher 18, 20 zu liegen kommt.

Ein jeweils in Verlängerung der Laufspalten 32 an der Aufnahmeschale 30 angeordneter Passstift 38 sorgt zusammen mit den Stiftlöchern 24 für eine exakte Positionierung des Tischbeins 12 bezüglich der Tischplatte 14 und für ein entsprechendes Gegenlager zum Eingreifhaken 36 des jeweiligen Klemmelements 34 an der Tischplatte 14.

Das Klemmelement 34 weist ferner an seiner Unterseite eine Ausnehmung 40 auf, in welcher eine Druckfeder 42 als Federelement angeordnet ist. Die Druckfeder 42 liegt mit einer Federseite (in den Schnittansichten rechts liegend) an einer Stirnwand 44 des Klemmelements 34 an. Die von der Druckfeder 42 zur Stirnwand 44 weisende Richtung definiert die Klemmrichtung des Klemmelements 34. Mit der anderen Federseite liegt die Druckfeder 42 hingegen an einem in der Ausnehmung 40 angeordneten Federanschlag 46 als Federwiderlager an, der in gleicher Richtung wie das Klemmelement 34 selbst in der Ausnehmung 40 beweglich ist.

Eine weitere Stirnwand 48 des Klemmelements 34 begrenzt dabei die Bewegung des Federanschlags 46 innerhalb der Ausnehmung 40 entgegen der Klemmrichtung. Diese Stirnwand 48 hat jedoch einen mittigen Durchbruch 50, durch welchen ein Zwischenglied 52 eines Knickhebel-Getriebes hindurchgreift, um den Federanschlag 46 zu verschieben. An der in der Ausnehmung 40 liegenden Seite ist das Zwischenglied 52 dabei über einen Scharnierstift 56 mit Scharnierösen 58 des Federanschlages 46 schwenkbar verbunden. Etwas unterhalb der Laufebene des Federanschlages 46 bzw. der Scharnierösen 56 ist ein Tragstift 60 angeordnet, welcher einen schwenkbaren Kipphebel 62 als Betätigungselement trägt. Der Kipphebel 62 weist einen Griffbereich 64 und einen über den Tragstift 60 auskragenden Lastarm 66 auf und ist so geformt, dass er zwischen einer Verriegelungsstellung (Figur 2), in welcher der Kipphebel 62 im Wesentlichen parallel zur Tischplatte 14 liegt, und einer Entriegelungsstellung (Figur 4) bewegt werden kann, in welcher der Kipphebel 62 im Wesentlichen senkrecht zur Tischplatte 14 steht.

Der Lastarm 66 des Kipphebels 62 weist ebenfalls Scharnierösen auf, in welche ein weiterer Scharnierstift 70 eingreift, um den Kipphebel 62 mit dem Zwischenglied 52 schwenkbar zu verbinden.

Der Federanschlag 46, das Zwischenglied 52 sowie der Kipphebel 62 bilden so das Knickhebel-Getriebe, dessen Funktionsweise weiter unten detaillierter beschrieben wird.

Zur Fixierung des Tragstifts 60 in der Aufnahmeschale 30 am Ende der Laufspalte 32 sind ein kleinerer Halteblock 72 sowie ein etwas größerer Rastblock 74 vorgesehen, die nachdem die anderen Bauteile in der Aufnahmeschale 30 montiert wurden von oben auf den Tragstift 60 gedrückt werden. Der Rastblock 74 weist dabei einen im eingebauten Zustand senkrecht nach unten verlaufenden Klemmelementanschlag 76 auf, an welchem das Klemmelement 34 in der Entriegelungsposition anschlägt. Rastzungen 78 beidseits des Klemmelementanschlags 76 wirken dabei mit einer jeweiligen Rille 77 an den Seitenwänden des Klemmelements 34 zusammen und sorgen dafür, dass der Kipphebel 62 nur unter einem vordefinierten Kraftaufwand aus der vollständigen Entriegelungsposition herausbewegt werden kann. Sowohl der Rastblock 74 als auch das Klemmelement 34 sind als symmetrische Bauteile ausgebildet, sodass je nachdem für welche der beiden Laufspalten 32 der Rastblock 74 und das Klemmelement 34 mit seinen Rillen 77 verwendet wird entweder die eine oder die andere Rastzunge 78 und die zugehörige Rille 77 zum Einsatz kommt.

Zuletzt wird die Aufnahmeschale 30, in welcher sämtliche am Tischbein 12 vorgesehenen Bauteile der Verbindungseinrichtung 10 angeordnet sind, zur Tischplatte 14 von einer Abdeckplatte 80 geschlossen, durch welche nur die Passstifte 38 und die Eingreifhaken 36 hindurchtreten.

### Die Verbindungseinrichtung 10 arbeitet wie folgt:

Befindet sich der Kipphebel 62 wie in Figur 2 gezeigt in der Verriegelungsstellung, so drückt die Druckfeder 42, die sich an dem Federanschlag 46 abstützt das Klemmelement 34 in die Klemmrichtung. Der Federanschlag 46 wird dabei von der Druckfeder 42 in Richtung des Kipphebels 62 gedrückt. Die Knickachse des Knickhebel-Getriebes, die durch den Scharnierstift 70 definiert ist, liegt jedoch unterhalb einer gedachten Linie zwischen der durch den Tragstift 60 festgelegten Betätigungsachse und einer durch den Scharnierstift 56 definierten, zweiten Knickachse. Dadurch wird der Kipphebel 62 noch stärker in die Verriegelungsstellung gedrückt, sodass die Verriegelungseinrichtung selbsthemmend ist.

Beim in Figur 3 gezeigten Übergang in die Entriegelungsstellung bewirkt die Schwenkbewegung des Kipphebels, dass die Knickachse des Knickhebel-Getriebes auf die andere Seite der gedachten Linie wechselt. Dabei muss der Federanschlag 46 ein kurzes Stück gegen die Federkraft der Druckfeder 42 bewegt werden. Danach gibt der Federanschlag 46 nach, sodass die Druckfeder 42 entlastet wird.

In der in Figur 4 gezeigten Entriegelungsstellung liegt der Kipphebel 62 am Kipphebelanschlag 76 an. Im letzten Wegabschnitt wurde dabei das Klemmelement 34 von dem Federanschlag 46, nachdem die Druckfeder 42 entlastet wurde, entgegen der Klemmrichtung, bewegt, da der Federanschlag 46 gegen die um den mittigen Ausbruch 50 herum vorhandene Stirnwand 48 des Klemmelements 34 anschlägt. Die Stirnwand 48 dient so als Mitnehmer für das Klemmelement 34. Der Eingreifhaken 36 gibt dadurch das entsprechende Eingriffsloch 18, 20 frei, sodass die Verbindung von Tischbein 12 und Tischplatte 14 gelöst werden kann.

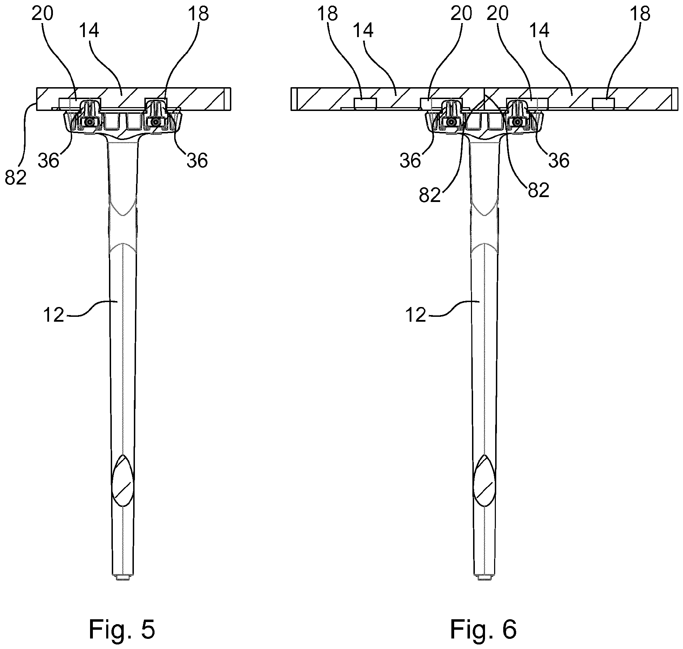

Schließlich wird anhand der Figuren 5 und 6 noch die Verbindungssituation an einem Konferenztischsystem deutlich. Die Figuren zeigen dabei Querschnitte, die durch die Eingriffslöcher 18 und 20 gehen.

Bei der Verbindung eines Tischbeins mit nur einer Tischplatte 14 (vgl. Figur 5) greifen die beiden Eingreifhaken 36 einer Verbindungseinrichtung 10 in das kürzere Eingriffsloch 18, das von der hier links liegenden Tischkante 82 weiter entfernt ist, sowie in den von der Tischkante 82 weiter entfernten Bereich des länglichen Eingriffsloch 20 ein.

Bei der Verbindung eines Tischbeins mit zwei Tischplatten 14 (vgl. Figur 6) greifen die beiden Eingreifhaken 36 einer Verbindungseinrichtung 10 jeweils in den näher zu den Tischkanten 82 liegenden Bereichen der länglichen Eingriffslöcher 20 ein. Auf diese Weise lassen sich lange Konferenztische aus identischen Tischbeinen 12 und Tischplatten 14 zusammenstellen.

## Patentansprüche

1. Verbindungseinrichtung (10) zum Verbinden eines Tischbeins (12) mit einer Tischplatte (14), die umfasst:
a) ein Hintergreifungselement (16), welches in oder an der Tischplatte (14) ausgebildet bzw. anordenbar ist und ein Eingriffsloch (18, 20) aufweist,
b) eine Verriegelungseinrichtung, die in oder an dem Tischbein (12) ausgebildet bzw. anordenbar ist, mit
- einem Klemmelement (34) mit einem Eingreifhaken (36), der dazu eingerichtet ist, in das Eingriffsloch (18, 20) des Hintergreifungselements (16) einzugreifen,
- einem Federelement (42), das sich einerseits zumindest indirekt an dem Klemmelement (34) und andererseits zumindest indirekt an einem Federwiderlager (46) abstützt, und mit
- einem Betätigungselement (62),
**dadurch gekennzeichnet, dass**
c) das Betätigungselement (62) zumindest indirekt derart auf das Federwiderlager (46) wirkt, dass
- in einer Verriegelungsstellung das Federwiderlager (46) sich in einer Position befindet, in welcher das Federelement (42) ausreichend Kraft aufbringt, um den Eingreifhaken (36) des Klemmelements (34) in dem Eingriffsloch (18) des Hintergreifungselements (16) zu sichern, und dass
- in einer Entriegelungsstellung das Federwiderlager (46) sich in einer Position befindet, in welcher das Federelement (42) gegenüber der Verriegelungsstellung zumindest teilweise entlastet ist.

2. Verbindungseinrichtung nach Anspruch 1, **dadurch gekennzeichnet, dass** das Betätigungselement (62) beim Übergang in die Entriegelungsstellung zumindest indirekt derart auf das Klemmelement (34) wirkt, dass das Klemmelement (34) nach dem Entlasten des Federelements (42) entgegen der Klemmrichtung bewegt wird.

3. Verbindungseinrichtung nach einem der vorhergehenden Ansprüche, **dadurch gekennzeichnet, dass** das Betätigungselement (62) über ein Knickhebel-Getriebe (46, 52, 62) mit dem Federwiderlager (46) verbunden ist.

4. Verbindungseinrichtung nach Anspruch 3, **dadurch gekennzeichnet, dass** das Betätigungselement (62) um eine Betätigungsachse (60) drehbar gelagert ist und das Knickhebel-Getriebe (46, 52, 62) ein Zwischenglied (52) umfasst, das mit dem Betätigungselement (62) und der Federanlage (46) schwenkbar verbunden ist, wodurch zwischen dem Betätigungselement (62) und dem Zwischenglied (52) eine erste Knickachse (70) und zwischen dem Zwischenglied (52) und dem Federwiderlager (46) eine zweite Knickachse (56) definiert wird.

5. Verbindungseinrichtung nach Anspruch 4, **dadurch gekennzeichnet, dass** die Betätigungsachse (60), die erste Knickachse (70) und die zweite Knickachse (56) parallel zueinander verlaufen und dass die erste Knickachse (70)
a) in der Verriegelungsstellung auf einer Seite einer gedachten Verbindungsachse von der Betätigungsachse (60) zur zweiten Knickachse (56) zu liegen kommt und
b) in der Entriegelungsstellung auf der anderen Seite der gedachten Verbindungsachse zu liegen kommt.

6. Verbindungseinrichtung nach einem der vorhergehenden Ansprüche, **dadurch gekennzeichnet, dass** die Verriegelungseinrichtung ein Rastelement (74) aufweist, das in der Entriegelungsstellung mit dem Klemmelement (62) derart zusammenarbeitet, dass das Betätigungselement (62) nur unter einem definierten Kraftaufwand seitens eines Bedieners aus der Entriegelungsstellung bewegt werden kann.

7. Verbindungseinrichtung nach einem der vorhergehenden Ansprüche, **dadurch gekennzeichnet, dass** die Verbindungseinrichtung (10) zwei Verriegelungseinrichtungen mit separaten Betätigungselementen (62) aufweist.

8. Verbindungseinrichtung nach einem der vorhergehenden Ansprüche, **dadurch gekennzeichnet, dass** das Hintergreifungselement (16) zwei Eingriffslöcher (18, 20) aufweist, wobei ein Eingriffsloch (20) senkrecht zur Klemmrichtung des Klemmelements (34) eine größere, insbesondere etwa doppelt so große Abmessung hat wie der Eingreifhaken (36) des Klemmelements (34).

## Claims

1. Connecting device (10) for connecting a table leg (12) to a table leaf (14), which connecting device comprises:
a) a back-gripping element (16), which is configured or can be disposed in or on the table leaf (14) and has an engagement hole (18, 20),
b) a locking device, which is configured or can be disposed in or on the table leg (12), comprising
- a clamping element (34), having an engagement hook (36) which is designed to engage in the engagement hole (18, 20) of the back-gripping element (16),
- a spring element (42) which is supported, on the one hand, at least indirectly against the clamping element (34) and, on the other hand, at least indirectly against a spring abutment (46),
and
- an actuating element (62),
**characterized in that**
c) the actuating element (62) acts at least indirectly on the spring abutment (46) such that
- in a locking position, the spring abutment (46) is in a position in which the spring element (42) applies sufficient force to secure the engagement hook (36) of the clamping element (34) in the engagement hole (18) of the back-gripping element (16), and such that
- in an unlocking position, the spring abutment (46) is in a position in which the spring element (42) is at least partially unloaded in relation to the locking position.

2. Connecting device according to Claim 1, **characterized in that** the actuating element (62), in the shift into the unlocking position, acts at least indirectly on the clamping element (34) such that the clamping element (34), after the unloading of the spring element (42), is moved counter to the clamping direction.

3. Connecting device according to one of the preceding claims, **characterized in that** das actuating element (62) is connected to the spring abutment (46) via an articulated lever mechanism (46, 52, 62).

4. Connecting device according to Claim 3, **characterized in that** the actuating element (62) is mounted rotatably about an actuation axis (60) and the articulated lever mechanism (46, 52, 62) comprises an intermediate member (52), which is pivotably connected to the actuating element (62) and the spring rest (46), whereby between the actuating element (62) and the intermediate member (52) is defined a first articulation axis (70) and between the intermediate member (52) and the spring abutment (46) is defined a second articulation axis (56).

5. Connecting device according to Claim 4, **characterized in that** the actuation axis (60), the first articulation axis (70) and the second articulation axis (56) run parallel to one another, and **in that** the first articulation axis (70).
a) in the locking position, comes to lie on one side of an imaginary connecting axis from the actuation axis (60) to the second articulation axis (56), and
b) in the unlocking position, comes to lie on the other side of the imaginary connecting axis.

6. Connecting device according to one of the preceding claims, **characterized in that** the locking device has a latching element (74), which, in the unlocking position, cooperates with the clamping element (62) such that the actuating element (62) can be moved out of the unlocking position only under a defined force expenditure on the part of a user.

7. Connecting device according to one of the preceding claims, **characterized in that** the connecting device (10) has two locking devices with separate actuating elements (62).

8. Connecting device according to one of the preceding claims, **characterized in that** the back-gripping element (16) has two engagement holes (18, 20), wherein an engagement hole (20) has perpendicular to the clamping direction of the clamping element (34) a larger, in particular twice as large dimension, than the engagement hook (36) of the clamping element (34)

## Revendications

1. Dispositif de liaison (10) conçu pour relier un piètement (12) de table à un plateau (14) de table, comprenant :
a) un élément (16) d'emprisonnement par-derrière, respectivement ménagé dans ou sur ledit plateau (14) de table, ou pouvant être placé dans ou sur ce dernier, et muni d'un trou de pénétration (18, 20),
b) un dispositif de verrouillage qui est respectivement ménagé dans ou sur ledit piètement (12) de table, ou peut être placé dans ou sur ce dernier, et inclut
- un élément de coincement (34), doté d'un crochet (36) de venue en prise agencé pour s'engager dans ledit trou de pénétration (18, 20) dudit élément (16) d'emprisonnement par-derrière,
- un élément élastique (42) prenant appui, d'une part, au moins indirectement sur ledit élément de coincement (34) et, d'autre part, au moins indirectement sur une contre-butée élastique (46), et
- un élément d'actionnement (62),
**caractérisé par le fait que**
c) l'élément d'actionnement (62) agit au moins indirectement sur la contre-butée élastique (46), de façon telle que,
- dans une position de verrouillage, ladite contre-butée élastique (46) occupe un emplacement auquel l'élément élastique (42) applique une force suffisante pour arrêter le crochet (36) de venue en prise de l'élément de coincement (34) dans le trou de pénétration (18) de l'élément (16) d'emprisonnement par-derrière, et que,
- dans une position de déverrouillage, ladite contre-butée élastique (46) occupe un emplacement auquel ledit élément élastique (42) est, au moins partiellement, soulagé par rapport à ladite position de verrouillage.

2. Dispositif de liaison selon la revendication 1, **caractérisé par le fait que**, lors du passage à la position de déverrouillage, l'élément d'actionnement (62) agit au moins indirectement sur l'élément de coincement (34), de façon telle que ledit élément de coincement (34) soit mû en sens inverse de la direction de coincement à l'issue du soulagement de l'élément élastique (42).

3. Dispositif de liaison selon l'une des revendications précédentes, **caractérisé par le fait que** l'élément d'actionnement (62) est relié à la contre-butée élastique (46) par l'intermédiaire d'une transmission (46, 52, 62) à levier articulé.

4. Dispositif de liaison selon la revendication 3, **caractérisé par le fait que** l'élément d'actionnement (62) est monté à rotation autour d'un axe d'actionnement (60), et la transmission (46, 52, 62) à levier articulé inclut une pièce intercalaire (52) reliée, de manière pivotante, audit élément d'actionnement (62) et à l'appui élastique (46), si bien qu'un premier axe de fléchissement (70) et un second axe de fléchissement (56) sont définis, respectivement, entre ledit élément d'actionnement (62) et ladite pièce intercalaire (52), et entre ladite pièce intercalaire (52) et la contre-butée élastique (46).

5. Dispositif de liaison selon la revendication 4, **caractérisé par le fait que** l'axe d'actionnement (60), le premier axe de fléchissement (70) et le second axe de fléchissement (56) s'étendent parallèlement les uns aux autres ; et **par le fait que** ledit premier axe de fléchissement (70)
a) vient se placer, dans la position de verrouillage, d'un côté d'un axe virtuel de liaison entre ledit axe d'actionnement (60) et ledit second axe de fléchissement (56), et
b) vient se placer, dans la position de déverrouillage, de l'autre côté dudit axe virtuel de liaison.

6. Dispositif de liaison selon l'une des revendications précédentes, **caractérisé par le fait que** le dispositif de verrouillage est pourvu d'un élément encliquetable (74) coopérant avec l'élément de coincement (34), dans la position de déverrouillage, de façon telle que l'élément d'actionnement (62) puisse être mû, hors de ladite position de déverrouillage, uniquement sous l'action d'une force bien définie appliquée par un utilisateur.

7. Dispositif de liaison selon l'une des revendications précédentes, **caractérisé par le fait que** ledit dispositif de liaison (10) compte deux dispositifs de verrouillage équipés d'éléments d'actionnement (62) distincts.

8. Dispositif de liaison selon l'une des revendications précédentes, **caractérisé par le fait que** l'élément (16) d'emprisonnement par-derrière comprend deux trous de pénétration (18, 20), un trou de pénétration (20) présentant alors, perpendiculairement à la direction de coincement de l'élément de coincement (34), un dimensionnement supérieur à celui du crochet (36) de venue en prise dudit élément de coincement (34), sensiblement du double en particulier.
